# EUROPEAN PATENT SPECIFICATION

(11) **EP 4 607 906 B1**
(45) Date of publication and mention of the grant of the patent: **18.02.2026**
(21) Application number: 24187709.1
(22) Date of filing: 10.07.2024
(51) Int. Cl.: H04N 1/00, G06F 3/12

(54) **EXAMINATION SYSTEM, EXAMINATION PROCESSING PROGRAM, AND EXAMINATION PROCESSING METHOD**
UNTERSUCHUNGSSYSTEM, UNTERSUCHUNGSVERARBEITUNGSPROGRAMM UND UNTERSUCHUNGSVERARBEITUNGSVERFAHREN
SYSTÈME D'EXAMEN, PROGRAMME DE TRAITEMENT D'EXAMEN ET PROCÉDÉ DE TRAITEMENT D'EXAMEN

(30) Priority: 26.02.2024 JP 2024026769
(43) Date of publication of application: 27.08.2025
(73) Proprietor: FUJIFILM Business Innovation Corp., Minato-ku Tokyo (JP)
(72) Inventor: NAKAYAMA, Hiroyoshi, Yokohama-shi, Kanagawa (JP); NOGUCHI, Daisuke, Yokohama-shi, Kanagawa (JP); YAMAGUCHI, Megumi, Yokohama-shi, Kanagawa (JP); KAWABE, Masatake, Yokohama-shi, Kanagawa (JP)
(74) Representative: Kurig, Thomas

(56) References cited:
- JP-A- 2006 289 827
- US-A1- 2010 020 351
- US-A1- 2010 195 139
- US-A1- 2023 306 586

## Description

### BACKGROUND OF THE INVENTION

### (i) Field of the Invention

The present invention relates to an examination system, an examination processing program, and an examination processing method.

### (ii) Description of Related Art

JP2019-77140A discloses a printing control device including a reception unit that receives printing data including stream printing data from a main apparatus, a storage unit that stores the stream printing data received by the reception unit, and a notification unit that, in a case where the storage of the stream printing data by the storage unit is completed, notifies the main apparatus that printing is completed.

JP2006-235664A discloses an image forming system consisting of a server on which an image forming apparatus application is installed, an input device that inputs image data, an image forming apparatus that forms an output image based on input data, and a host computer. The image forming apparatus application includes a page description language conversion processing section that converts an object into a page description language, a variable printing data creation processing section that, in a case where a notification indicating that data processing within an object reuse scope is finished is received, creates variable printing data based on a name, an image size, and positional information of the object and that stores the variable printing data in a file, a compressed archive creation section that receives a notification from the variable printing data creation processing section and that combines a variable printing data file and an object data file into one compressed archive, a printing data accumulation section that stores data obtained by converting the object into the page description language in a file, a GUI, an object processing section that provides the notification indicating that the data processing within the object reuse scope is finished, an object management section that registers the name, the image size, and the positional information of the object, and a coordinate conversion section that converts and registers the positional information in an object list.
JP 2006 289827 A discloses an image processor in which a user can select a unit for performing inspection in accordance with the content of inspection. When a printed matter is outputted by processing an image inputted from a PC, an MFP inspects each processing result. In order to perform various processing on the input image or the processing result, the MFP comprises a Page Description Language interpreter, an RIP and a printer section, and a plurality of inspection units provided in correspondence with respective processing units and inspecting the processing results therefrom. An inspection unit for inspecting the processing result is then selected from a plurality of inspection units, and processing result of an input image by the selected inspection unit is displayed.
US 2010/020351 A1 discloses an image processing apparatus including a plurality of different conversion processing systems that converts page description language data into raster image data; a conversion control unit that controls each of the different conversion processing systems to convert page description language data to be inspected into raster image data; and a difference information outputting unit that outputs difference information in a case where there is a difference among the raster image data as conversion results obtained by the conversion processing systems.
US 2010/195139 A1 discloses print rendering verification is described in which a Page Description Language print file can be received where the Page Description Language print file is generated when a print job of a printable image is initiated. A raster image can then be generated from the Page Description Language print file. The raster image can be compared to a reference image that corresponds to the raster image, where the reference image is a comparative standard by which to evaluate print quality of the printable image. A determination can then be made as to whether the printable image is an acceptable quality based on the comparison of the raster image to the reference image.
US 2023/306586 A1 discloses an inspection apparatus that executes an inspection by comparing an image of a printed material printed by a printing apparatus and a reference image. The inspection apparatus extracts a region corresponding to a content type on a basis of content information of the reference image, sets an inspection level for the region extracted in the extracting; and presents, to a user, the region extracted in the extracting and the inspection level set in the setting, associated with the reference image.

### SUMMARY OF THE INVENTION

A configuration for converting processed data (for example, PDL data) on which predetermined processing (for example, PDL processing) is performed into image data that can be formed as an image by an image forming apparatus has been known.

A system that, in this configuration, can check whether quality of the processed data is good or poor in a case where the processed data is generated by performing the processing on pre-processing data before the processing is performed is required.

The present invention is provided in the appended claims. The following disclosure serves a better understanding of the present invention. An object of the present disclosure is to provide an examination system that, in a configuration for converting processed data on which predetermined processing is performed into image data that is formable as an image by an image forming apparatus, can check whether quality of the processed data is good or poor in a case where the processed data is generated by executing the processing.

According to a first aspect of the present disclosure, there is provided an examination system including a processor configured to convert processed data on which predetermined processing is performed into image data that is formable as an image by an image forming apparatus, and in which the processor is configured to, in a case where the processed data is generated by performing the processing on pre-processing data before the processing is performed, examine the processed data with reference to the pre-processing data.

According to a second aspect of the present disclosure, in the first aspect, the processor may be configured to, in a case where an examination result of the processed data indicates good quality, execute conversion processing of converting the processed data into the image data.

According to a third aspect of the present disclosure, in the second aspect, the processor may be configured to, in a case where the examination result of the processed data indicates poor quality, stop the conversion processing of converting the processed data into the image data.

According to a fourth aspect of the present disclosure, in the third aspect, the processor may be configured to, in a case where the examination result of the processed data indicates poor quality, execute the processing again on the pre-processing data.

According to a fifth aspect of the present disclosure, in any one of the first aspect to the fourth aspect, the processor may be configured to, in a case where an examination result of the processed data indicates poor quality, notify a user of the poor quality.

According to a sixth aspect of the present disclosure, in the fifth aspect, the processor may be configured to, in a case where the examination result of the processed data indicates poor quality, notify the user of poor quality information indicating a part in which the poor quality has occurred in the processed data.

According to a seventh aspect of the present disclosure, in the fifth aspect or the sixth aspect, the processor may be configured to, in a case where an instruction to execute the processing again on the pre-processing data is acquired from the user, execute the processing again on the pre-processing data.

According to an eighth aspect of the present disclosure, there is provided an examination processing program causing a computer to execute a process for converting processed data on which predetermined processing is performed into image data that is formable as an image by an image forming apparatus, the process comprising examination processing of examining, in a case where the processed data is generated by performing the processing on pre-processing data before the processing is performed, the processed data with reference to the pre-processing data.

According to a ninth aspect of the present disclosure, there is provided an examination processing method of an examination system including a processor configured to convert processed data on which predetermined processing is performed into image data that is formable as an image by an image forming apparatus, the examination processing method including examining, in a case where processed data is generated by the performing processing on pre-processing data before the processing is performed, the processed data with reference to the pre-processing data

According to the configuration of the first aspect, in a configuration for converting processed data on which predetermined processing is performed into image data that is formable as an image by an image forming apparatus, whether quality of the processed data is good or poor can be checked in a case where the processed data is generated by executing the processing.

According to the configuration of the second aspect, the image data of good quality can be generated.

According to the configuration of the third aspect, generation of the image data of poor quality can be suppressed, compared to a case where the conversion processing of converting the processed data into the image data is executed even with the examination result of the processed data indicating poor quality.

According to the configuration of the fourth aspect, the processed data can be generated again.

According to the configuration of the fifth aspect, the user can check whether the quality of the generated processed data is good or poor.

According to the configuration of the sixth aspect, the user can check a poor quality part of the generated processed data.

According to the configuration of the seventh aspect, the generation of the processed data can be executed again in response to a request of the user.

### BRIEF DESCRIPTION OF THE DRAWINGS

Exemplary embodiment(s) of the present invention will be described in detail based on the following figures, wherein:
Fig. 1 is a schematic diagram illustrating a printing system according to the present exemplary embodiment;
Fig. 2 is a block diagram illustrating an example of a hardware configuration of an examination system according to the present exemplary embodiment;
Fig. 3 is a block diagram illustrating an example of a functional configuration of the examination system according to the present exemplary embodiment;
Fig. 4 is a flowchart illustrating an example of a flow of examination processing according to the present exemplary embodiment;
Fig. 5 is a descriptive diagram illustrating a summary of the examination processing according to the present exemplary embodiment;
Fig. 6 is a flowchart illustrating an example of a flow of examination processing according to a modification example; and
Fig. 7 is a flowchart illustrating an example of a flow of examination processing according to another modification example.

### DETAILED DESCRIPTION OF THE INVENTION

Hereinafter, an example of an exemplary embodiment according to the present invention will be described with reference to the drawings.

### <Printing System 10>

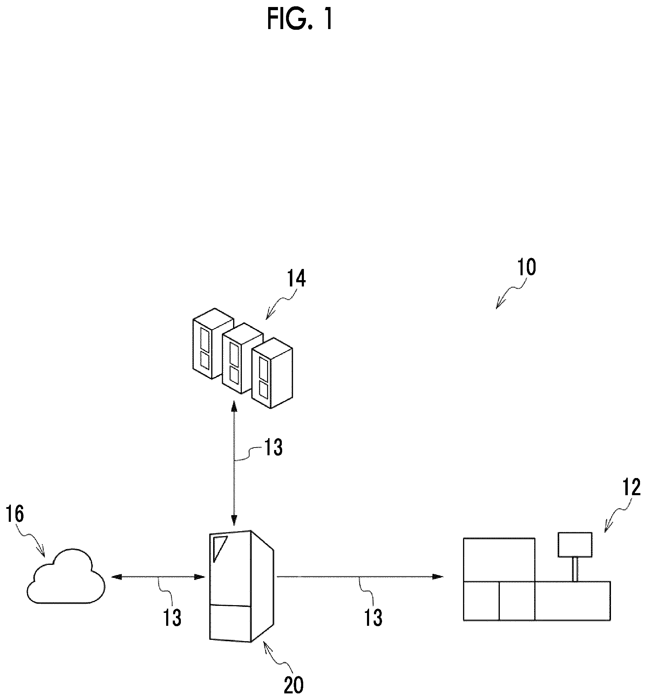

A printing system 10 according to the present exemplary embodiment will be described. Fig. 1 is a schematic diagram illustrating a configuration of the printing system 10 according to the present exemplary embodiment.

The printing system 10 is a system that performs printing on a recording medium. As illustrated in Fig. 1, the printing system 10 includes a printing apparatus 12, a provision apparatus 14, a workflow system 16, and an image processing system 20.

As illustrated in Fig. 1, each section of the printing system 10 is connected through a communication line 13. The communication line 13 is, for example, a communication line using at least one of wired communication or wireless communication. A wireless communication line is, for example, a line using the Internet, an intranet, and the like. Hereinafter, each section of the printing system 10 will be described.

### <Printing Apparatus 12>

The printing apparatus 12 is an example of an image forming apparatus and is an apparatus that performs printing processing on a recording medium such as paper. The printing apparatus 12 performs the printing processing on the recording medium such as paper based on printing data transmitted from the image processing system 20. Accordingly, a printed material is output from the printing apparatus 12. The printing is an example of image forming.

### <Provision Apparatus 14>

The provision apparatus 14 is an apparatus that provides information related to the printed material (hereinafter, referred to as printed material information) to the image processing system 20. For example, the printed material information includes information related to imagery (image), a text (document), the number of copies, the number of pages, and a cover of the printed material.

Specifically, in the provision apparatus 14, for example, PDL data is generated by executing PDL processing in accordance with an operation performed by a user, and the PDL data is transmitted to the image processing system 20 through the communication line 13.

The PDL data is data including the printed material information and is data described in a page description language (PDL). The PDL data is an example of processed data. The PDL processing is processing of converting a printing target including the printed material information into the PDL data and is an example of predetermined processing. The page description language is a computer programming language for executing image processing and the like in the image processing system 20. Various formats such as a PostScript (PS) (registered trademark) format are available as a format of the page description language.

In the present exemplary embodiment, the provision apparatus 14 transmits pre-processing data before the PDL processing is performed to the image processing system 20 through the communication line 13. The pre-processing data is data including the printed material information and is, for example, data in a stream format.

For example, a general-purpose computer apparatus such as a personal computer (PC) is used as the provision apparatus 14.

### <Workflow System 16>

As described above, the workflow system 16 is a system that can communicate with the image processing system 20, manages a processing step (workflow) of each section of the printing system 10, and shows progress (status) of each section of the printing system 10. The workflow system 16 is constructed by, for example, a cloud server.

### <Image Processing System 20>

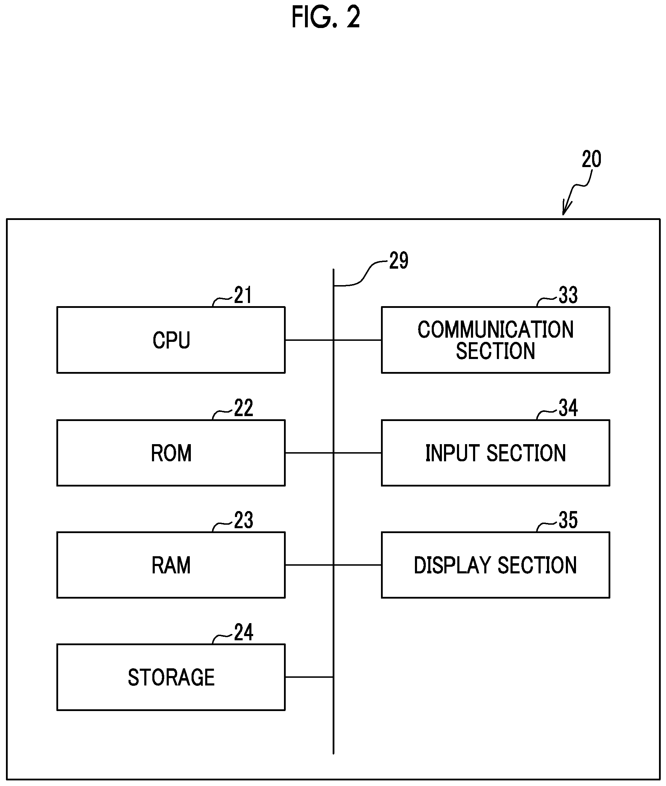

The image processing system 20 is an example of an examination system and is a system that processes various types of image data. Specifically, the image processing system 20 functions as a computer, and as illustrated in Fig. 2, includes a central processing unit (CPU) 21, a read only memory (ROM) 22, a random access memory (RAM) 23, a storage 24, a communication section 33, an input section 34, and a display section 35. The CPU 21, the ROM 22, the RAM 23, the storage 24, the communication section 33, the input section 34, and the display section 35 are connected to each other through a bus 29. The image processing system 20 is configured with, for example, a single server apparatus.

The communication section 33 is a communication interface and is a configuration section for communicating with other apparatuses such as the printing apparatus 12, the provision apparatus 14, and the workflow system 16. Specifically, the communication section 33 communicates with other apparatuses through the communication line 13 using at least one of wired communication or wireless communication.

The input section 34 is a configuration section into which an instruction provided by the user is input. Specifically, the input section 34 is configured with, for example, an input key (for example, a keyboard and an operation button) and a touch panel on which an input operation is performed by the user.

The display section 35 is an example of a notification section and notifies the user of presentation information by displaying the presentation information to be presented to the user. The display section 35 is configured with, for example, a liquid crystal display or an organic electro luminescence (EL) display.

The display section 35 may function as the input section 34. In this case, the input section is configured with, for example, a touch panel of a resistive type or a capacitive type, and the instruction provided by the user is input into the input section through a contact operation of the user.

The CPU 21 is a central operation processing unit, and executes various programs including an information processing program such as an examination processing program or controls each section. The ROM 22 stores various programs including the information processing program and various types of data. The RAM 23 temporarily stores a program or data as a work region. The storage 24 is configured with a storage medium such as a hard disk drive (HDD), a solid state drive (SSD), or a flash memory and stores various programs including an operating system and various types of data. The information processing program may be stored in the storage 24.

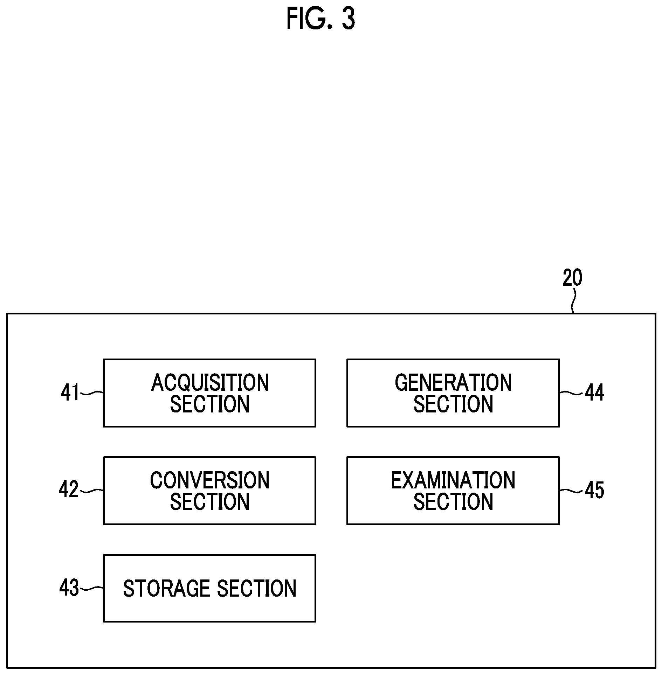

In the image processing system 20, the CPU 21 reads out various programs including the information processing program from the ROM 22 or from the storage 24 and executes the programs using the RAM 23 as the work region. The CPU 21 implements various functions by executing the information processing program. Hereinafter, a functional configuration implemented by cooperation between the CPU 21 as a hardware resource and the information processing program as a software resource will be described. Fig. 3 is a block diagram illustrating an example of a functional configuration of the image processing system 20 according to the present exemplary embodiment.

In the image processing system 20, the CPU 21 functions as an acquisition section 41, a conversion section 42, a storage section 43, a generation section 44, and an examination section 45, as illustrated in Fig. 3, by executing the information processing program.

The acquisition section 41 acquires the instruction provided by the user input through the input section 34. The acquisition section 41 acquires various types of data transmitted from the provision apparatus 14. The acquisition section 41 acquires various types of data stored in the storage 24.

The conversion section 42 executes conversion processing of converting the PDL data transmitted from the provision apparatus 14 into the printing data. The printing data is data that can be printed by the printing apparatus 12 and is an example of the image data. The conversion section 42, specifically, generates the printing data by executing rasterization processing on the PDL data. The printing data is represented as, for example, bitmap data.

In a case where the pre-processing data before the PDL processing is performed is transmitted from the provision apparatus 14, the storage section 43 stores the pre-processing data by storing the pre-processing data in the storage 24.

The generation section 44 generates the PDL data by executing the PDL processing on the pre-processing data before the PDL processing is performed. Specifically, the generation section 44, for example, generates the PDL data by executing the PDL processing on the pre-processing data in the stream format.

The PDL data is data described in the page description language (PDL). The PDL processing is processing of converting the pre-processing data into the PDL data. The page description language is a computer programming language for executing the image processing and the like in the image processing system 20. Various formats such as a PostScript (PS) (registered trademark) format are available as a format of the page description language.

The examination section 45 executes examination processing of examining the PDL data with reference to the pre-processing data. Specifically, in the examination processing, the examination section 45 examines the processed data by comparing the pre-processing data stored in the storage 24 with the PDL data to obtain a difference between the pre-processing data and the PDL data.

In the present exemplary embodiment, the examination section 45 extracts an object used on each page and coordinates of the object by analyzing the PDL data generated by the generation section 44 and examines whether or not a difference is found with respect to the object used in each page and the coordinates of the object in the pre-processing data.

In a case where an examination result of the PDL data indicates good quality, the examination section 45 causes the conversion section 42 to execute the conversion processing of converting the PDL data into the image data. In a case where the examination result of the processed data indicates poor quality, the examination section 45 stops the conversion processing of converting the processed data into the image data. That is, the examination section 45 does not cause the conversion section 42 to execute the conversion processing.

### <Examination Processing According to Present Exemplary Embodiment>

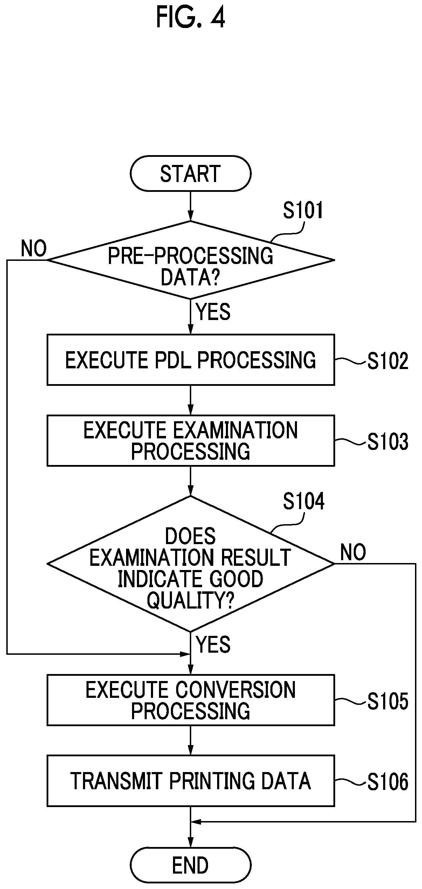

Next, an example of the examination processing according to the present exemplary embodiment will be described. Fig. 4 is a flowchart illustrating an example of a flow of the examination processing executed by the image processing system 20.

The present processing is performed by causing the CPU 21 to read out the information processing program from the ROM 22 or from the storage 24 and execute the information processing program. For example, execution of the present processing starts in a case where the CPU 21 acquires data including the printed material information from the provision apparatus 14. The data is one of the PDL data generated by executing the PDL processing in the provision apparatus 14 or the pre-processing data before the PDL processing is performed.

As illustrated in Fig. 4, in a case where the present processing starts, the CPU 21 first determines whether or not the acquired data acquired from the provision apparatus 14 is the pre-processing data. In a case where the CPU 21 determines that the acquired data is the pre-processing data (step S101: YES), the CPU 21 transitions to step S102. In a case where the CPU 21 determines that the acquired data is not the pre-processing data (step S101: NO), the CPU 21 transitions to step S105. In other words, in a case where the CPU 21 determines that the acquired data is the PDL data, the CPU 21 transitions to step S105.

In step S102, the CPU 21 generates the PDL data by executing the PDL processing on the pre-processing data (step S102).

Next, the CPU 21 executes the examination processing on the PDL data generated in step S102.

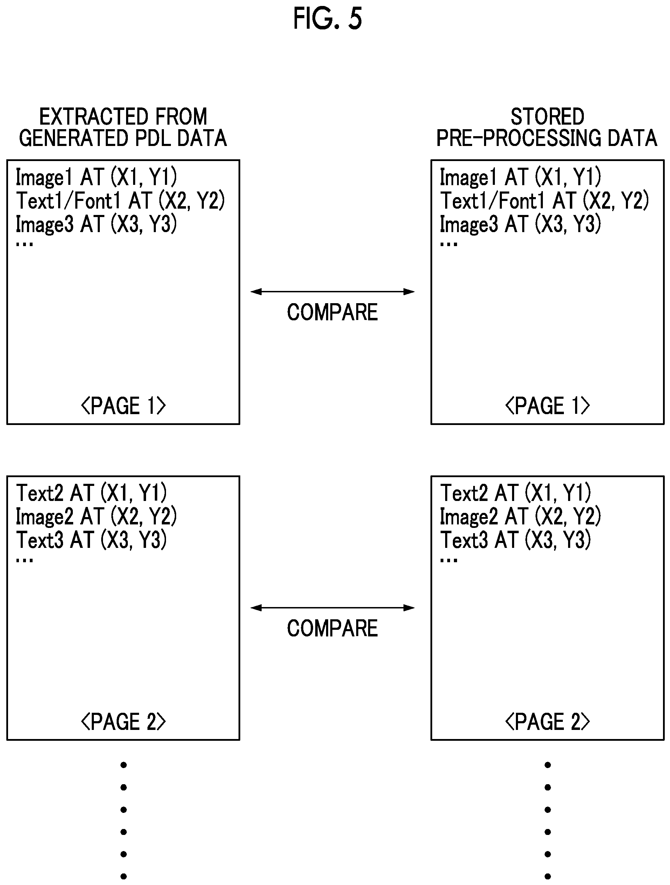

In the examination processing, as illustrated in Fig. 5, the CPU 21, for example, extracts the object used on each page and the coordinates of the object by analyzing the PDL data and examines whether or not a difference is found with respect to the object used on each page and the coordinates of the object in the pre-processing data by comparison.

Next, the CPU 21 determines whether or not the examination result of the examination processing indicates good quality (step S104). Specifically, the CPU 21 determines that the examination result indicates good quality in a case where the difference is not found in the examination processing.

In a case where the CPU 21 determines that the examination result of the examination processing indicates good quality (step S104: YES), the CPU 21 transitions to step S105. In a case where the CPU 21 determines that the examination result of the examination processing indicates poor quality (step S104: NO), the CPU 21 finishes the present processing.

In step S105, the CPU 21 executes the conversion processing of converting the PDL data into the printing data. Specifically, the CPU 21 generates the printing data by executing the rasterization processing on the PDL data. The printing data is represented as, for example, bitmap data.

Next, the CPU 21 transmits the printing data generated in step S105 to the printing apparatus 12 and finishes the present processing.

In step S102, the CPU 21 may execute the PDL processing in predetermined units (for example, a predetermined number of pages or a predetermined number of copies) of the pre-processing data. In this case, the CPU 21 may execute the examination processing in predetermined units.

In the examination processing, the workflow system 16 may notify the user of the progress (status) of each section of the printing system 10 through the display section 35.

### <Action of Present Exemplary Embodiment>

In the present exemplary embodiment, in a case where the PDL data is generated by executing the PDL processing on the pre-processing data, the CPU 21 examines the PDL data with reference to the pre-processing data (refer to step S103). Accordingly, whether quality of the PDL data is good or poor may be checked.

In the present exemplary embodiment, in a case where the examination result of the PDL data indicates good quality (step S104: YES), the CPU 21 executes the conversion processing of converting the PDL data into the printing data (step S105). Accordingly, the printing data of good quality may be generated.

In the present exemplary embodiment, in a case where the examination result of the PDL data indicates poor quality (step S104: NO), the CPU 21 stops the conversion processing of converting the PDL data into the printing data. Accordingly, generation of the printing data of poor quality is suppressed.

The present invention is not limited to the exemplary embodiment, and various modifications, changes, and improvements can be made without departing from the gist of the present invention. For example, a plurality of modification examples illustrated in the present specification may be configured in combination with each other, as appropriate.

### <Modification Example>

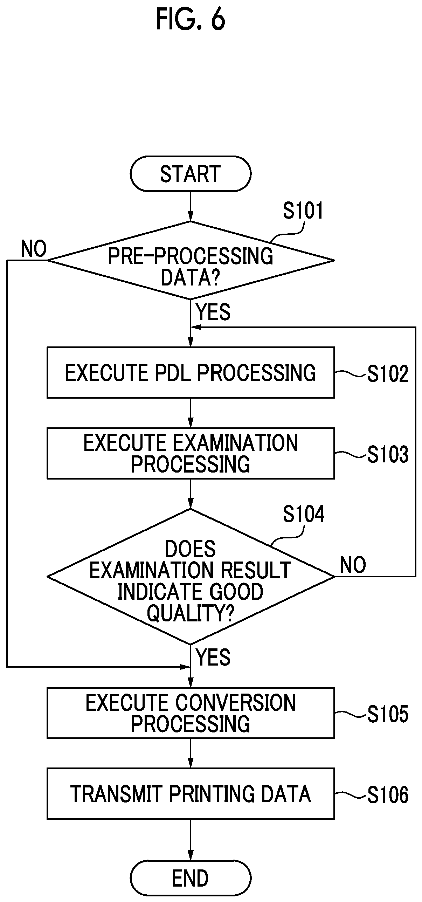

In the present exemplary embodiment, the CPU 21 stops the conversion processing of converting the PDL data into the printing data in a case where the CPU 21 determines that the examination result of the PDL data indicates poor quality (step S104: NO). However, the present invention is not limited to the exemplary embodiment. For example, as illustrated in Fig. 6, in a case where the CPU 21 determines that the examination result of the PDL data indicates poor quality (step S104: NO), the CPU 21 may return to step S102 and execute the PDL processing again on the pre-processing data. According to this configuration, the PDL data may be generated again.

In the present modification example, the CPU 21, for example, finishes the processing in a case where the examination result of the PDL data indicates poor quality.

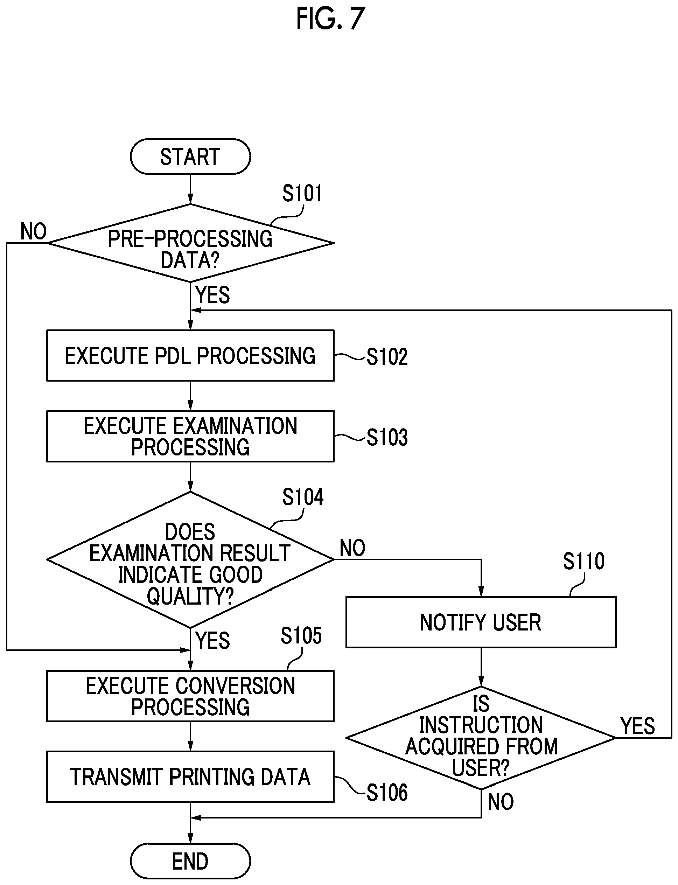

As illustrated in Fig. 7, in a case where the CPU 21 determines that the examination result of the PDL data indicates poor quality (step S104: NO), the CPU 21 may notify the user of the poor quality (step S110). According to this configuration, the user may check whether the quality of the generated PDL data is good or poor.

In this configuration, in a case where the CPU 21 determines that the examination result of the PDL data indicates poor quality (step S104: NO), the CPU 21 may notify the user of poor quality information (for example, a page number) indicating a part in which the poor quality has occurred in the PDL data. According to this configuration, the user may check the poor quality part of the generated PDL data. The notification is provided to the user through, for example, the display section 35.

In this configuration, in a case where the CPU 21 acquires an instruction to execute the PDL processing again on the pre-processing data from the user (step S112: YES), the CPU 21 may execute the PDL processing again on the pre-processing data. According to this configuration, the generation of the PDL data may be executed again in response to a request of the user. In a case where the instruction is not acquired from the user (step S112: NO), the present processing is finished.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Accordingly, for example, each of the conversion processing of converting the PDL data into the printing data, generation processing of generating the PDL data by executing the PDL processing on the pre-processing data, and the examination processing of examining the PDL data with reference to the pre-processing data may be executed by a different processor.

In the present exemplary embodiment, the image processing system 20 is described as being configured with a single apparatus. However, the image processing system 20 may be configured with a plurality of apparatuses. For example, the CPU 21 and the storage 24 in which various types of data such as the pre-processing data are stored may be provided in different apparatuses. Accordingly, the "system" in the present exemplary embodiment may be configured with either a plurality of apparatuses or a single apparatus.

The present invention is not limited to the exemplary embodiment, and various modifications, changes, and improvements can be made without departing from the gist of the present invention. For example, a plurality of modification examples illustrated above may be combined with each other, as appropriate.

According to appended claim 1, in a configuration for converting processed data on which predetermined processing is performed into image data that is formable as an image by an image forming apparatus, whether quality of the processed data is good or poor can be checked in a case where the processed data is generated by executing the processing.

According to appended claim 1, the image data of good quality can be generated.

According to appended claim 1, generation of the image data of poor quality can be suppressed, compared to a case where the conversion processing of converting the processed data into the image data is executed even with the examination result of the processed data indicating poor quality.

According to appended claim 2, the processed data can be generated again.

According to appended claim 3, the user can check whether the quality of the generated processed data is good or poor.

According to appended claim 4, the user can check a poor quality part of the generated processed data.

According to appended claim 5, the generation of the processed data can be executed again in response to a request of the user.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

10: printing system
12: printing apparatus
13: communication line
14: provision apparatus
16: workflow system
20: image processing system (example of examination system)
21: CPU (example of processor)
22: ROM
23: RAM
24: storage
29: bus
33: communication section
34: input section
35: display section
41: acquisition section
42: conversion section
43: storage section
44: generation section
45: examination section

## Claims

1. An examination system (20) comprising:
a processor (21) configured to:
convert processed data on which predetermined processing is performed into image data that is formable as an image by an image forming apparatus (12); and
wherein the processor is configured to:
in a case where the processed data is generated by performing the processing on pre-processing data before the processing is performed, examine the processed data with reference to the pre-processing data; and
in a case where an examination result of the processed data indicates good quality, execute conversion processing of converting the processed data into the image data; the examination system (20) being **characterized in that** the processor is further configured to:
in a case where the examination result of the processed data indicates poor quality, stop the conversion processing of converting the processed data into the image data.

2. The examination system (20) according to claim 1, wherein the processor (21) is configured to:
in a case where the examination result of the processed data indicates poor quality, execute the processing again on the pre-processing data.

3. The examination system (20) according to claim 1, wherein the processor (21) is configured to:
in a case where an examination result of the processed data indicates poor quality, notify a user of the poor quality.

4. The examination system according to claim 3, wherein the processor (21) is configured to:
in a case where the examination result of the processed data indicates poor quality, notify the user of poor quality information indicating a part in which the poor quality has occurred in the processed data.

5. The examination system (20) according to claim 3, wherein the processor (21) is configured to:
in a case where an instruction to execute the processing again on the pre-processing data is acquired from the user, execute the processing again on the pre-processing data.

6. A non-transitory computer readable medium storing an examination processing program causing a computer (20) to execute a process for converting processed data on which predetermined processing is performed into image data that is formable as an image by an image forming apparatus (12), the process comprising:
examining, in a case where the processed data is generated by performing the processing on pre-processing data before the processing is performed, the processed data with reference to the pre-processing data; and
executing, in a case where an examination result of the processed data indicates good quality, conversion processing of converting the processed data into the image data; the non-transitory computer readable medium being **characterized in that** the process further comprises:
stopping, in a case where the examination result of the processed data indicates poor quality, the conversion processing of converting the processed data into the image data.

7. An examination processing method of an examination system (20) for executing a process for converting processed data on which predetermined processing is performed into image data that is formable as an image by an image forming apparatus (12), the examination processing method comprising:
examining, in a case where processed data is generated by the performing processing on pre-processing data before the processing is performed, the processed data with reference to the pre-processing data; and
executing, in a case where an examination result of the processed data indicates good quality, conversion processing of converting the processed data into the image data; the examination processing method being **characterized in** further comprising:
stopping, in a case where the examination result of the processed data indicates poor quality, the conversion processing of converting the processed data into the image data.

## Patentansprüche

1. Untersuchungssystem (20), umfassend:
einen Prozessor (21), der so konfiguriert ist, dass er:
verarbeitete Daten, an denen vorbestimmte Verarbeitung durchgeführt wird, in Bilddaten, die von einer Bilderzeugungsvorrichtung (12) als ein Bild erzeugt werden können, umwandelt; und
wobei der Prozessor so konfiguriert ist, dass er:
in einem Fall, in dem die verarbeiteten Daten durch Durchführen der Verarbeitung an Vorverarbeitungsdaten erzeugt werden, bevor die Verarbeitung durchgeführt wird, die verarbeiteten Daten unter Bezugnahme auf die Vorverarbeitungsdaten untersucht; und
in einem Fall, in dem ein Untersuchungsergebnis der verarbeiteten Daten gute Qualität angibt, Umwandlungsverarbeitung des Umwandelns der verarbeiteten Daten in die Bilddaten ausführt; wobei das Untersuchungssystem (20) **dadurch gekennzeichnet ist, dass** der Prozessor ferner so konfiguriert ist, dass er:
in einem Fall, in dem das Untersuchungsergebnis der verarbeiteten Daten schlechte Qualität angibt, die Umwandlungsverarbeitung des Umwandelns der verarbeiteten Daten in die Bilddaten stoppt.

2. Untersuchungssystem (20) nach Anspruch 1, wobei der Prozessor (21) so konfiguriert ist, dass er:
in einem Fall, in dem das Untersuchungsergebnis der verarbeiteten Daten schlechte Qualität angibt, die Verarbeitung an den Vorverarbeitungsdaten erneut ausführt.

3. Untersuchungssystem (20) nach Anspruch 1, wobei der Prozessor (21) so konfiguriert ist, dass er:
in einem Fall, in dem ein Untersuchungsergebnis der verarbeiteten Daten schlechte Qualität angibt, einen Benutzer über die schlechte Qualität benachrichtigt.

4. Untersuchungssystem nach Anspruch 3, wobei der Prozessor (21) so konfiguriert ist, dass er:
in einem Fall, in dem das Untersuchungsergebnis der verarbeiteten Daten schlechte Qualität angibt, den Benutzer über Informationen schlechter Qualität, die einen Teil, in dem die schlechte Qualität in den verarbeiteten Daten aufgetreten ist, angeben, benachrichtigt.

5. Untersuchungssystem (20) nach Anspruch 3, wobei der Prozessor (21) so konfiguriert ist, dass er:
in einem Fall, in dem eine Anweisung zum erneuten Ausführen der Verarbeitung an den Vorverarbeitungsdaten von dem Benutzer erfasst wird, die Verarbeitung an den Vorverarbeitungsdaten erneut ausführt.

6. Nicht flüchtiges computerlesbares Medium, das ein
Untersuchungsverarbeitungsprogramm speichert, das einen Computer (20) veranlasst, einen Prozess zum Umwandeln von verarbeiteten Daten, an denen vorbestimmte Verarbeitung durchgeführt wird, in Bilddaten, die von einer Bilderzeugungsvorrichtung (12) als ein Bild erzeugt werden können, auszuführen, wobei der Prozess umfasst:
Untersuchen, in einem Fall, in dem die verarbeiteten Daten durch Durchführen der Verarbeitung an Vorverarbeitungsdaten erzeugt werden, bevor die Verarbeitung durchgeführt wird, der verarbeiteten Daten unter Bezugnahme auf die Vorverarbeitungsdaten; und
Ausführen, in einem Fall, in dem ein Untersuchungsergebnis der verarbeiteten Daten gute Qualität angibt, von Umwandlungsverarbeitung des Umwandelns der verarbeiteten Daten in die Bilddaten; wobei das nicht flüchtige computerlesbare Medium **dadurch gekennzeichnet ist, dass** der Prozess ferner umfasst:
Stoppen, in einem Fall, in dem das Untersuchungsergebnis der verarbeiteten Daten schlechte Qualität angibt, der Umwandlungsverarbeitung des Umwandelns der verarbeiteten Daten in die Bilddaten.

7. Untersuchungsverarbeitungsverfahren eines Untersuchungssystems (20) zum Ausführen eines Prozesses zum Umwandeln von verarbeiteten Daten, an denen vorbestimmte Verarbeitung durchgeführt wird, in Bilddaten, die von einer Bilderzeugungsvorrichtung (12) als ein Bild erzeugt werden können, wobei das Untersuchungsverarbeitungsverfahren umfasst:
Untersuchen, in einem Fall, in dem verarbeitete Daten durch das Durchführen von Verarbeitung an Vorverarbeitungsdaten erzeugt werden, bevor die Verarbeitung durchgeführt wird, der verarbeiteten Daten unter Bezugnahme auf die Vorverarbeitungsdaten; und
Ausführen, in einem Fall, in dem ein Untersuchungsergebnis der verarbeiteten Daten gute Qualität angibt, von Umwandlungsverarbeitung des Umwandelns der verarbeiteten Daten in die Bilddaten; wobei das Untersuchungsverarbeitungsverfahren ferner umfasst:
Stoppen, in einem Fall, in dem das Untersuchungsergebnis der verarbeiteten Daten schlechte Qualität angibt, der Umwandlungsverarbeitung des Umwandelns der verarbeiteten Daten in die Bilddaten.

## Revendications

1. Système d'examen (20) comprenant :
un processeur (21) configuré pour :
convertir des données traitées sur lesquelles un traitement prédéterminé est effectué en données d'images qui sont formables comme une image par un appareil de formation d'images (12) ; et
dans lequel le processeur est configuré pour :
dans un cas où les données traitées sont générées en effectuant le traitement sur des données de prétraitement avant que le traitement ne soit effectué, examiner les données traitées en référence aux données de prétraitement ; et
dans un cas où un résultat d'examen des données traitées indique une bonne qualité, exécuter un traitement de conversion consistant à convertir les données traitées en les données d'images ; le système d'examen (20) étant **caractérisé en ce que** le processeur est en outre configuré pour :
dans un cas où le résultat d'examen des données traitées indique une mauvaise qualité, arrêter le traitement de conversion consistant à convertir les données traitées en les données d'images.

2. Système d'examen (20) selon la revendication 1, dans lequel le processeur (21) est configuré pour :
dans un cas où le résultat d'examen des données traitées indique une mauvaise qualité, exécuter de nouveau le traitement sur les données de prétraitement.

3. Système d'examen (20) selon la revendication 1, dans lequel le processeur (21) est configuré pour :
dans un cas où un résultat d'examen des données traitées indique une mauvaise qualité, notifier un utilisateur de la mauvaise qualité.

4. Système d'examen selon la revendication 3, dans lequel le processeur (21) est configuré pour :
dans un cas où le résultat d'examen des données traitées indique une mauvaise qualité, notifier l'utilisateur des informations de mauvaise qualité indiquant une partie dans laquelle la mauvaise qualité s'est produite dans les données traitées.

5. Système d'examen (20) selon la revendication 3, dans lequel le processeur (21) est configuré pour :
dans un cas où une instruction d'exécuter de nouveau le traitement sur les données de prétraitement est reçue de l'utilisateur, exécuter de nouveau le traitement sur les données de prétraitement.

6. Support non transitoire lisible par ordinateur stockant un programme de traitement d'examen amenant un ordinateur (20) à exécuter un processus de conversion de données traitées sur lesquelles un traitement prédéterminé est effectué en données d'images qui sont formables comme une image par un appareil de formation d'images (12), le processus comprenant :
examiner, dans un cas où les données traitées sont générées en effectuant le traitement sur des données de prétraitement avant que le traitement ne soit effectué, les données traitées en référence aux données de prétraitement ; et
exécuter, dans un cas où un résultat d'examen des données traitées indique une bonne qualité, un traitement de conversion consistant à convertir les données traitées en les données d'images ; le support non transitoire lisible par ordinateur étant **caractérisé en ce que** le processus comprend en outre :
arrêter, dans un cas où le résultat d'examen des données traitées indique une mauvaise qualité, le traitement de conversion consistant à convertir les données traitées en les données d'images.

7. Procédé de traitement d'examen d'un système d'examen (20) pour exécuter un processus de conversion de données traitées sur lesquelles un traitement prédéterminé est effectué en données d'images qui sont formables comme une image par un appareil de formation d'images (12), le procédé de traitement d'examen comprenant :
examiner, dans un cas où des données traitées sont générées en effectuant le traitement sur des données de prétraitement avant que le traitement ne soit effectué, les données traitées en référence aux données de prétraitement ; et
exécuter, dans un cas où un résultat d'examen des données traitées indique une bonne qualité, un traitement de conversion consistant à convertir les données traitées en les données d'images ; le procédé de traitement d'examen étant **caractérisé en ce qu'**il comprend en outre :
arrêter, dans un cas où le résultat d'examen des données traitées indique une mauvaise qualité, le traitement de conversion consistant à convertir les données traitées en les données d'images.
